# EUROPÄISCHE PATENTANMELDUNG

(11) **EP 1 176 421 A2**
(43) Veröffentlichungstag der Anmeldung: **30.01.2002**
(21) Anmeldenummer: 01114307.0
(22) Anmeldetag: 13.06.2001
(51) Int. Cl.: G01N 33/487, G01N 33/49

(54) **Testelement-Analysesystem**

(30) Priorität: 01.07.2000 DE 10032015
(71) Anmelder: Roche Diagnostics GmbH, 68298 Mannheim (DE); F. HOFFMANN-LA ROCHE AG, 4070 Basel (CH)
(72) Erfinder: Haar, Hans-Peter, 69168 Wiesloch (DE); Meacham, Georg B.K., Shaker Heigts, Ohio 44122 (US)
(74) Vertreter: Pfeifer, Hans-Peter, Dr.

(57) **Zusammenfassung**

Analysesystem zur analytischen Untersuchung einer Probe, insbesondere einer Körperflüssigkeit. Es besteht aus Testelementen (3), die zur Durchführung einer Analyse mit einer zu untersuchenden Probe (8) in Kontakt gebracht werden und einem Auswertegerät (2) mit einer Testelementhalterung (5) zur Positionierung des Testelementes (3) in einer Meßposition und einer Meß- und Auswerteelektronik (15). Die Meß- und Auswerteelektronik (15) des Auswertegerätes (2) weist eine Temperaturkorrektureinrichtung (18) auf, um bei der Ermittlung des Analyseresultates die zum Zeitpunkt der Messung in der Meßzone (7) herrschende Temperatur zu berücksichtigen. Die Temperaturkorrektureinrichtung (18) schließt eine Temperaturverlauf-Abbildungseinrichtung (20) zur stromlosen Rückverfolgung des dem Meßzeitpunkt vorausgehenden Temperaturverlaufs ohne dem Meßzeitpunkt vorausgehenden Verbrauch an elektrischer Energie ein.

## Beschreibung

Die Erfindung betrifft ein Testelement-Analysesystem zur analytischen Untersuchung einer Probe, insbesondere einer Körperflüssigkeit von Menschen oder Tieren. Zu dem System gehören zwei Bestandteile, nämlich Testelemente, die zur Durchführung einer Analyse mit einer zu untersuchenden Probe in Kontakt gebracht werden und an denen in einer Meßzone eine für die Analyse charakteristische meßbare Veränderung stattfindet, und ein Auswertegerät mit einer Positionierungseinrichtung zur Positionierung eines Testelementes in einer Meßposition, einer Meßeinrichtung zur Messung der charakteristischen Veränderung und einer Auswerteelektronik zur Ermittlung eines auf dem Ergebnis der Messung basierenden Analyseresultates.

Testelement-Analysesysteme sind insbesondere in der Medizin für die Analyse von Urin und Blut gebräuchlich. Die Testelemente haben meist die Form von Teststreifen, jedoch sind auch andere Formen von Testelementen, beispielsweise flache, näherungsweise quadratische Plättchen, gebräuchlich.

In der Regel enthalten die Testelemente Reagenzien, deren Reaktion mit der Probe zu einer detektierbaren Veränderung des Testelementes führt, die mit dem zu dem System gehörigen Auswertegerät gemessen wird. Gebräuchlich sind insbesondere photometrische Analysesysteme, bei denen die Reaktion eine Farbänderung in einer Nachweisschicht des Testelementes verursacht, die photometrisch gemessen wird. Daneben haben elektrochemische Analysesysteme eine erhebliche Bedeutung, bei denen infolge der Reaktion eine elektrisch meßbare elektrochemische Veränderung des Testelementes stattfindet. Neben diesen mit Reagenzien arbeitenden Analysesystemen werden auch reagenzfreie Analysesysteme diskutiert, bei denen nach Kontaktierung des Testelementes mit der Probe eine analytisch charakteristische Eigenschaft der Probe selbst (beispielsweise deren optisches Absorptionsspektrum) gemessen wird. Die Erfindung ist grundsätzlich für alle diese Verfahren verwendbar.

Teilweise werden Testelement-Analysesysteme in medizinischen Labors eingesetzt. Die Erfindung richtet sich jedoch insbesondere auf Anwendungsfälle, bei denen die Analyse durch den Patienten selbst durchgeführt wird, um seinen Gesundheitszustand laufend zu überwachen ("home-monitoring"). Von besonderer medizinischer Bedeutung ist dies für die Behandlung von Diabetikern, die die Konzentration von Glucose in ihrem Blut mehrfach täglich bestimmen müssen, um ihre Insulininjektionen danach einzustellen. Für derartige Zwecke müssen die Auswertegeräte leicht, klein, batteriebetrieben, kostengünstig und robust sein.

Ein grundlegendes Problem besteht darin, daß die für die Analyse charakteristische Meßgröße meist stark temperaturabhängig ist. Diese Temperaturabhängigkeit liegt häufig bei ein bis zwei Prozent pro Grad. Im Bereich des home-monitoring ist es unvermeidlich, daß das Analysesystem starken Temperaturänderungen ausgesetzt ist. Dort muß mit Schwankungen der Temperatur von mindestens ± 5° gerechnet werden, wobei wesentlich höhere Temperaturschwankungen vorkommen können, wenn die Messung auch unter ungewöhnlichen Bedingungen (beispielsweise im Auto oder im Freien) möglich sein soll.

Um die daraus resultierenden Meßungenauigkeiten zu vermeiden, wurde vorgeschlagen, die Meßzone des Testelementes mittels einer entsprechenden Temperierungseinrichtung auf eine bestimmte konstante Temperatur zu temperieren. Beispielsweise ist in dem US-Patent 5,035,862 die Temperierung individueller Testfelder von Urinteststreifen mittels induktiver Beheizung beschrieben. Derartige Verfahren sind jedoch bei kleinen batteriebetriebenen Geräten wegen des hohen Energieverbrauches unpraktikabel.

Bei manchen Analysesystemen erfolgt eine Temperaturmessung, um eine Korrektur von durch Temperaturschwankungen verursachten Meßfehlern zu ermöglichen. Dies geschieht üblicherweise mittels eines elektrischen Temperatursensors (z.B. mittels eines Thermoelementes oder Thermowiderstandes). Wegen der baulichen Gegebenheiten gebräuchlicher Analysesysteme ist der Temperatursensor entfernt von der Meßzone des Testelementes lokalisiert. Infolgedessen ist er thermisch getrennt von der Meßzone, d.h. er ist nicht derartig mit der Meßzone thermisch gekoppelt, daß die gemessene Momentantemperatur jederzeit mit der tatsächlichen Temperatur der Meßzone übereinstimmt. Er wird nachfolgend als Umgebungstemperatursensor ATS (Ambient Temperature Sensor) bezeichnet.

Die Auswerteelektronik solcher Systeme schließt eine Temperaturkorrektureinrichtung ein, um bei der Ermittlung des Analyseresultates die zum Zeitpunkt der Messung herrschende Temperatur zu berücksichtigen. Eine solche Korrektur setzt jedoch voraus, daß die tatsächliche Temperatur in der Meßzone des Analyseelements zum Zeitpunkt der Messung mit der von dem ATS gemessenen Momentantemperatur übereinstimmt. Insbesondere im Bereich des home-monitoring ist diese Bedingung vielfach nicht erfüllt, weil die Lebensumstände des Patienten es erfordern, daß er Analysen an verschiedenen Orten und unter wechselnden Temperaturbedingungen durchführt. Diese Temperaturschwankungen können zu großen Abweichungen der von dem ATS gemessenen Momentantemperatur gegenüber der tatsächlichen Temperatur in der Meßzone des Testelementes führen.

Zur Lösung dieses Problems wird in dem US-Patent 5,972,715 vorgeschlagen, an der Halterung des Testelementes in dem Auswertegerät oder an dem Testelement selbst eine Temperaturmeßfläche vorzusehen, die mit einem thermochromen Flüssigkristall (TLC) beschichtet ist. Die Temperatur des TLC wird durch eine photometrische Messung ermittelt. Dadurch, daß sich die Temperaturmeßstelle in enger Nachbarschaft zu der Meßzone des Testelementes befindet, soll der Unterschied zwischen der gemessenen Temperatur und der tatsächlichen Temperatur der Meßzone minimiert werden. Dies wird mit guter Genauigkeit jedoch nur erreicht, wenn das Testelement selbst mit dem TLC beschichtet ist. Dies führt jedoch zu erheblichen zusätzlichen Kosten bei der Herstellung der Testelemente. Außerdem läßt sich eine akzeptable Genauigkeit der Temperaturmessung nur mit einem hohen meßtechnischen Aufwand erreichen.

Der Erfindung liegt die Aufgabe zugrunde, ein Analysesystem zur Verfügung zu stellen, mit dem durch eine verbesserte Temperaturkompensation eine erhöhte Meßgenauigkeit erreicht wird. Dies soll auf eine Art und Weise geschehen, die den Anforderungen an home-monitoring-Systeme gerecht wird. Insbesondere soll die Verbesserung nicht zu einer nennenswerten Erhöhung des Gewichtes, der Größe oder des Batterieverbrauchs des Auswertegerätes führen.

Die Aufgabe wird bei einem Analysesystem der vorstehend erläuterten Art dadurch gelöst, daß die Temperaturkorrektureinrichtung eine Temperaturverlauf-Abbildungseinrichtung zur stromlosen Rückverfolgung des dem Meßzeitpunkt vorausgehenden Temperaturverlaufs ohne dem Meßzeitpunkt vorausgehenden Verbrauch an elektrischer Energie einschließt.

Die Temperaturverlauf-Abbildungseinheit ermöglicht es, bei der Auswertung des Meßsignales und der Ermittlung des Analyseresultates den dem Meßzeitpunkt vorausgehenden Verlauf der Temperatur in der Umgebung des Gerätes zu berücksichtigen. Dadurch kann eine wesentlich verbesserte Information über die im Bereich der Meßzone des Testelementes tatsächlich herrschende Temperatur gewonnen werden. Wenn beispielsweise das Auswertegerät 10 Minuten vor der Messung aus einer kalten Umgebung (z.B. ein im Freien bei 10°C abgestelltes Auto) in eine wesentlich wärmere Umgebung (z.B. einen Wohnraum mit 20°C) gebracht wurde, wird diese starke Temperaturerhöhung von dem Temperaturverlauf-Abbildungssystem angezeigt. In diesem Fall ist davon auszugehen, daß die von einem ATS angezeigte Momentantemperatur nicht der tatsächlichen Umgebungstemperatur entspricht (also kein thermisches Gleichgewicht zu der Umgebung besteht). Die Temperatur in der Meßzone des Testelementes folgt Temperaturänderungen in der Umgebung wesentlich schneller als ein in dem Gehäuse des Gerätes fixierter ATS, weil der Wärmeübergang von der Umgebung zu der Testzone besser und die Wärmekapazität des Testelementes vergleichsweise gering ist. Die entsprechende Nacheilung der in dem Gerät gemessenen Momentantemperatur gegenüber der tatsächlichen Temperatur der Meßzone kann aufgrund der Anzeige des Temperaturverlauf-Abbildungssystems und entsprechender in die Auswerteelektronik einprogrammierter Erfahrungswerte abgeschätzt werden. Auf Basis dieser Information kann das Analyseresultat korrigiert oder - falls eine Korrektur wegen zu starker Temperaturänderungen nicht möglich ist - die Ermittlung des Analyseresultats abgebrochen und ein Fehlersignal angezeigt werden.

Ein wesentliches Merkmal der Erfindung besteht darin, daß in dem Zeitraum, auf den sich der Temperaturverlauf bezieht, keine elektrische Energie verbraucht wird. Eine in diesem Sinne stromlos arbeitendes Temperaturverlauf-Abbildungseinrichtung kann zu außerordentlich günstigen Kosten realisiert werden. Sie wird nachfolgend als STHD (System Temperature History Device) bezeichnet.

Das erfindungsgemäße System ist vor allem für die homemonitoring-Analyse besser geeignet als ein in dem US-Patent 5,405,511 beschriebenes System, bei dem die Temperatur mittels eines ATS in regelmäßigen Abständen elektrisch gemessen und auf Basis des gemessenen Temperaturverlaufes eine Korrekturtemperatur durch Extrapolation bestimmt wird. Dazu ist es notwendig, die Temperaturmessungen vor der Analyse über einen ausreichend langen Zeitraum fortlaufend oder in bestimmten Abständen durchzuführen. Um die damit verbundene Wartezeit vor Durchführung des Tests zu vermeiden, werden auch dann Temperaturmessungen im Abstand von einigen Minuten durchgeführt, wenn das Gerät ausgeschaltet ist. Dadurch kann die Extrapolation auf die Korrekturtemperatur unmittelbar nach dem Einschalten des Geräts durchgeführt werden, jedoch auf Kosten eines erhöhten Batterieverbrauchs, weil die Geräteelektronik jeweils im Abstand von wenigen Minuten zur Bestimmung der Temperatur in Betrieb gesetzt werden muß.

Die STHD kann auf unterschiedliche Weise realisiert sein. Beispielsweise kann ein temperaturempfindlicher Flüssigkristall-Chip, der in thermischem Kontakt zu einer größeren thermischen Masse steht (beispielsweise auf einen Metallkörper aufgeklebt ist) verwendet werden. Die Abbildung des Temperaturverlaufes basiert dabei darauf, daß Änderungen der Umgebungstemperatur zu einer unterschiedlich raschen Änderung der Farbe der Flüssigkristalle in verschiedenen Zonen des Chip führen, wobei diese Farbänderungen meßtechnisch (photometrisch) nachgewiesen werden können.

Einfacher und deswegen bevorzugt ist jedoch eine Ausführungsform, bei der die STHD eine thermische Masse und mehrere, an unterschiedlichen Stellen lokalisierte elektrische Temperatursensoren einschließt, wobei mindestens ein als Temperaturverlauf-Kontrollsensor THS (Temperature History Sensor) bezeichneter Temperatursensor im Innern der thermischen Masse lokalisiert ist. Die thermische Masse wird von einem Festkörper mit konstanter hoher Wärmekapazität gebildet. Sie ist in dem Auswertegerät wärmeisoliert befestigt, d.h. gegenüber den übrigen Gerätebauteilen möglichst vollständig thermisch isoliert, so daß ihre Temperatur möglichst weitgehend nur von dem an der Oberfläche der thermischen Masse stattfindenden Wärmeaustausch mit der Umgebungsluft abhängt.

Gemäß einer bevorzugten Ausgestaltung ist ein zu der STHD gehörender Temperatursensor, der als Referenzsensor RTS (Reference Temperature Sensor) bezeichnet wird, derartig in der Nähe der thermischen Masse, aber ohne Kontakt zu dieser, lokalisiert, daß er die Temperatur der Umgebungsluft in der Nachbarschaft der thermischen Masse mißt. Dieser Temperatursensor kann gleichzeitig als ATS der Temperaturkorrektureinrichtung dienen. Bei dieser Ausgestaltung basiert die Funktion der STHD auf dem Vergleich der im Innern der thermischen Masse gemessenen Temperatur mit der Temperatur der Umgebungsluft in ihrer Nachbarschaft. Wenn beide Temperaturen übereinstimmen, ist davon auszugehen, daß sich die Umgebungstemperatur in dem der Messung vorausgehenden Zeitraum nicht geändert hat. Wenn die Temperatur der thermischen Masse geringer ist als die Temperatur der Umgebung, läßt dies auf eine dem Meßzeitpunkt vorausgehende Temperaturerhöhung schließen. Im umgekehrten Fall (thermische Masse wärmer als Umgebungstemperatur) ist die Temperatur gefallen.

Bei dieser Ausführungsform wird das Material der thermischen Masse vorzugsweise so gewählt, daß der von der Wärmeleitfähigkeit des Materials bestimmte Wärmetransport in ihrem Innern schnell ist im Vergleich zu der Wärmeübertragung zwischen der Umgebungsluft und der thermischen Masse. Diese Bedingung ist für die meisten typischen Festkörpermaterialien, insbesondere Metalle, aber auch Kunststoffe, erfüllt, weil deren Wärmeleitfähigkeit im Vergleich zu dem an ihrer Oberfläche stattfindenden Wärmeaustausch mit der Umgebungsluft hoch ist. Die meisten Festkörper sind deswegen isotherme Wärmespeicherelemente. Ein nennenswerter Temperaturgradient kann sich nur an der Oberfläche solcher Festkörpermaterialien ausbilden, während interne Temperaturgradienten im Inneren solcher Materialien so gering sind, daß sie nur mit sehr hohem Aufwand gemessen werden können.

Es ist jedoch auch möglich, die thermische Masse aus einem Material herzustellen, dessen Wärmeleitfähigkeit so niedrig ist, daß Änderungen der Umgebungstemperatur zu Temperaturgradienten im Innern der thermischen Masse führen, die ohne besonderen meßtechnischen Aufwand mit guter Genauigkeit gemessen werden können. Als Material, das diese Bedingung erfüllt und zugleich eine ausreichend hohe Wärmekapazität hat, sind stark poröse Isolator-Materialien wie beispielsweise poröse Gläser oder Keramiken geeignet. Bei Verwendung eines solchen Materials für die thermische Masse stehen vorzugsweise mindestens zwei Temperatursensoren der STHD in Kontakt zu der thermischen Masse, wobei die Differenz der Temperaturanzeigen der beiden Temperatursensoren ein Maß für die den Meßzeitpunkt vorausgehende Änderung der Umgebungstemperatur ist. Mit anderen Worten bildet bei einer solchen STHD der aus der zeitlichen Änderung der Umgebungstemperatur resultierende räumliche Temperaturgradient in der thermischen Masse eine Information über den dem Meßzeitpunkt vorausgehenden zeitlichen Temperaturverlauf. Dabei ist zweckmäßigerweise einer der Temperatursensoren in der Nähe der in Kontakt zu der Umgebungsluft stehenden Grenzschicht der thermischen Masse lokalisiert. Er wird nachfolgend als Masse-Grenzschicht-Sensor MBLS (Mass Boundary Layer Sensor) bezeichnet. Der zweite Sensor (THS) sollte möglichst weit von dieser Grenzschicht entfernt im Innern der thermischen Masse lokalisiert sein.

Die Erfindung wird nachfolgend anhand von in den Figuren dargestellten Ausführungsbeispielen näher erläutert. Die beschriebenen Besonderheiten können einzeln oder in Kombination verwendet werden, um bevorzugte Ausgestaltungen der Erfindung zu schaffen. Es zeigen:
- Fig. 1: eine Teil-Schnittdarstellung eines erfindungsgemäßen Analysesystems;
- Fig. 2: eine perspektivische Darstellung einer für die Erfindung geeigneten STHD;
- Fig. 3: eine Teil-Schnittdarstellung der STHD nach Fig. 2;
- Fig. 4: eine graphische Darstellung der zeitlichen Änderung des Meßwertes eines THS im Inneren einer thermischen Masse bei einer Ausführungsform gemäß der Figuren 2 und 3;
- Fig. 5: eine Teil-Schnittdarstellung einer alternativen Ausführungsform einer STHD;
- Fig. 6: eine Schema-Darstellung einer alternativen Formgebung einer thermischen Masse.

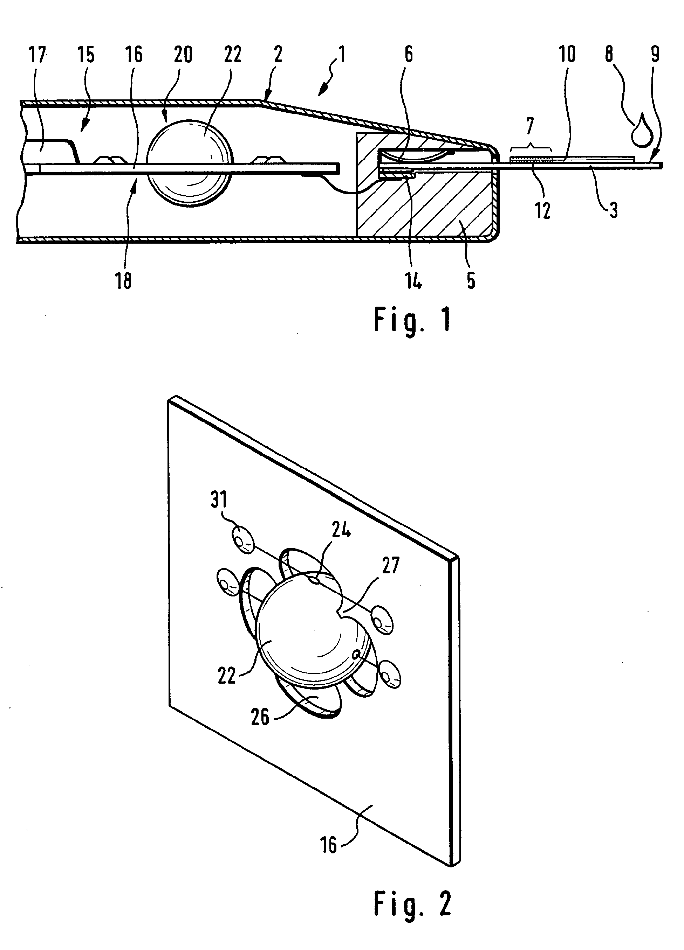

Das in Fig. 1 dargestellte Analysesystem 1 besteht aus einem Auswertegerät 2 und zur einmaligen Verwendung vorgesehenen (disposiblen) Testelementen 3.

Das Auswertegerät 2 hat eine Testelement-Halterung 5, mit der ein Testelement 3 in der in Fig. 1 dargestellten Meßposition positioniert wird. Das Testelement 3 ist durch geeignete Mittel, beispielsweise einer Blattfeder 6, in der Meßposition fixiert.

Zur Durchführung einer Messung wird Probenflüssigkeit in eine Meßzone 7 des Testelementes 3 gebracht. Bei der dargestellten Ausführungsform geschieht dies dadurch, daß ein Blutstropfen 8 auf eine am Ende des Testelementes 3 vorgesehene Probenauftragszone 9 aufgebracht und von dort in einem Kapillarspalt 10 zu der Meßzone 7 gesaugt wird. In der Meßzone 7 befindet sich eine Reagenzschicht 12, die von der Probenflüssigkeit aufgelöst wird und mit deren Bestandteilen reagiert.

Die Reaktion führt zu einer meßbaren Veränderung in der Meßzone 7. Im dargestellten Fall eines elektrochemischen Testelementes erfolgt die Messung einer elektrischen Meßgröße mittels in der Meßzone vorgesehener, in den Figuren nicht dargestellter Elektroden. In der Meßposition wird ein Kontakt zwischen den Elektroden des Testelementes 3 und Anschlußkontakten 14 der Testelement-Halterung 5 hergestellt. Die Anschlußkontakte 14 sind mit einer Meß- und Auswerteelektronik 15 verbunden, die im Hinblick auf eine möglichst kompakte Bauweise und hoher Zuverlässigkeit hochintegriert ist. Im dargestellten Fall besteht sie im wesentlichen aus einer Leiterplatine 16 und einem Spezial-IC (ASIC) 17. Insoweit ist das Analysesystem konventionell konstruiert und bedarf keiner näheren Erläuterung.

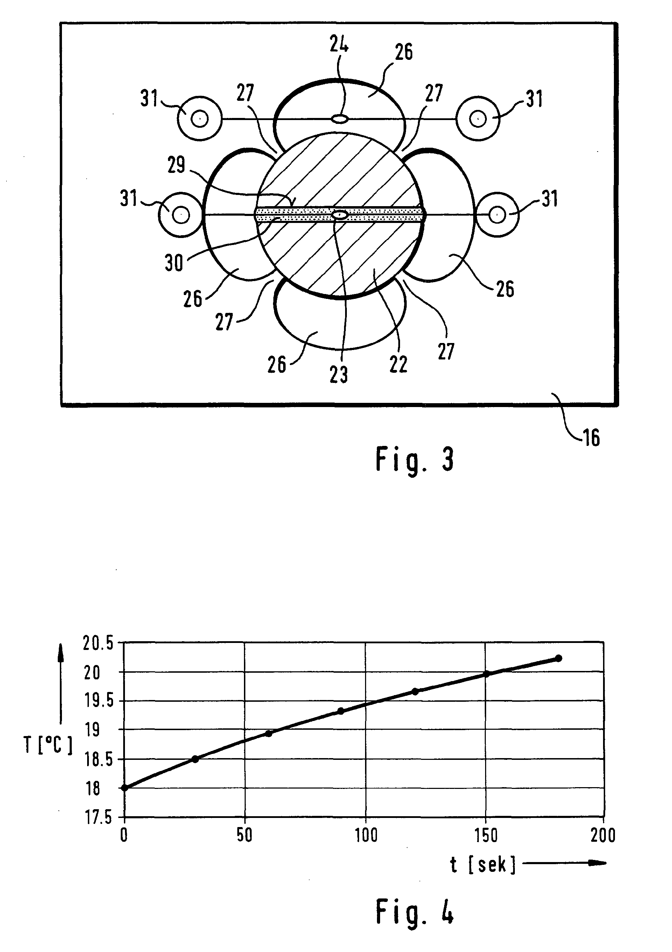

Ein Bestandteil der Meß- und Auswerteelektronik 15 ist eine Temperaturkorrektureinrichtung 18 mit einer Temperaturverlauf-Abbildungseinrichtung STHD 20, die in den Figuren 2 und 3 detaillierter dargestellt ist. Sie besteht im wesentlichen aus einer kugelförmigen wärmeisoliert befestigten thermischen Masse 22, einem ersten, im Zentrum der thermischen Masse 22 lokalisierten Temperatursensor (THS) 23 und einem zweiten, in der Nähe der thermischen Masse, aber ohne Kontakt zu dieser lokalisierten Temperatursensor (RTS) 24, der zugleich der ATS der Temperaturkorrektureinrichtung ist. Es handelt sich um eine STHD des oben erläuterten ersten Typs, bei der die Wärmeleitfähigkeit der thermischen Masse 22 so hoch ist, daß sie ein isothermes Wärmespeicherelement bildet. Der erste Temperatursensor (THS) kann deshalb an nahezu beliebiger Stelle in der thermischen Masse 22 angeordnet sein. Auch die äussere Form der thermischen Masse 22 ist bei dieser Ausführungsform von geringer Bedeutung für die Funktion.

Wichtig ist jedoch, daß die thermische Masse 22 so befestigt ist, daß ihre Temperatur im wesentlichen nur von der Temperatur der Umgebungsluft abhängt und daß eine rationelle und kostengünstige Fertigung möglich ist. Um diese Ziele zu erreichen ist die thermische Masse 22 bei der dargestellten bevorzugten Ausführungsform in eine Leiterplatine 16 integriert, wobei vorzugsweise eine gemeinsame Leiterplatine 16 sowohl für die Meß- und Auswerteelektronik 15 als auch für die STHD verwendet wird. In der Leiterplatine 16 sind in der Umgebung der thermischen Masse 22 Ausnehmungen 26 vorgesehen, die so ausgebildet sind, daß die thermische Masse nur von relativ dünnen Fingern 27 berührt und gehalten wird, so daß in geringem Umfang eine Wärmeübertragung von der Leiterplatine 16 zu der thermischen Masse 22 stattfindet. Der erste Temperatursensor 23 befindet sich in einer Bohrung 29 der thermischen Masse 22, die nach dem Einbringen des Temperatursensors mit einem Gießharz 30 gefüllt wird.

Der zweite Temperatursensor 24 ist in einer der Ausnehmungen 26 an seinem Drähten frei gespannt aufgehängt. Beide Sensoren 23,24 sind über Kontaktpunkte 31 mit nicht dargestellten Leiterbahnen der Platine 16 verbunden.

In einer praktischen Ausführungsform wurde die thermische Masse 23 von einer Aluminiumkugel mit einem Durchmesser von 6 mm gebildet, die in der dargestellten Weise in einer 0,8 mm starken Leiterplatine aus Kunststoff befestigt wurde. Als Temperatursensoren wurden Thermistoren mit einem Durchmesser von 0,25 mm und Leitungsdrähten von 0,025 mm verwendet.

Das Temperaturänderungsverhalten (thermal response) eines solchen Systems bei einer plötzlichen Temperaturänderung von 18° auf 22° ist in Figur 4 dargestellt, wobei auf der Abszisse die Zeit in Sekunden und auf der Ordinate die Temperatur in Grad C angegeben ist. Es zeigt sich, daß die innerhalb von drei Minuten stattfindende Temperaturänderung gut meßbar ist. Aus dem Vergleich der mit dem THS 23 und dem RTS 24 gemessenen Temperaturen kann man demzufolge auf Temperaturänderungen in der Vergangenheit schließen. Durch Wahl der Größe der thermischen Masse läßt sich die Trägheit der STHD so einstellen, daß sie der Meßsituation des Analysegerätes entspricht. Die Zeitkonstante der Temperaturänderung der STHD sollte näherungsweise der Zeitkonstanten entsprechen, mit der die Temperaturänderung des ATS der Änderung der Temperatur in der Meßzone nacheilt.

Bei der dargestellten Ausführungsform bildet ein einziger Temperatursensor 24 einerseits den ATS der TemperaturKorrektureinrichtung und andererseits den RTS der STHD. Dies ist kostengünstig und deshalb zweckmäßig. Grundsätzlich besteht auch die Möglichkeit, unabhängig von der STHD einen ATS an anderer Stelle in dem Gerät vorzusehen.

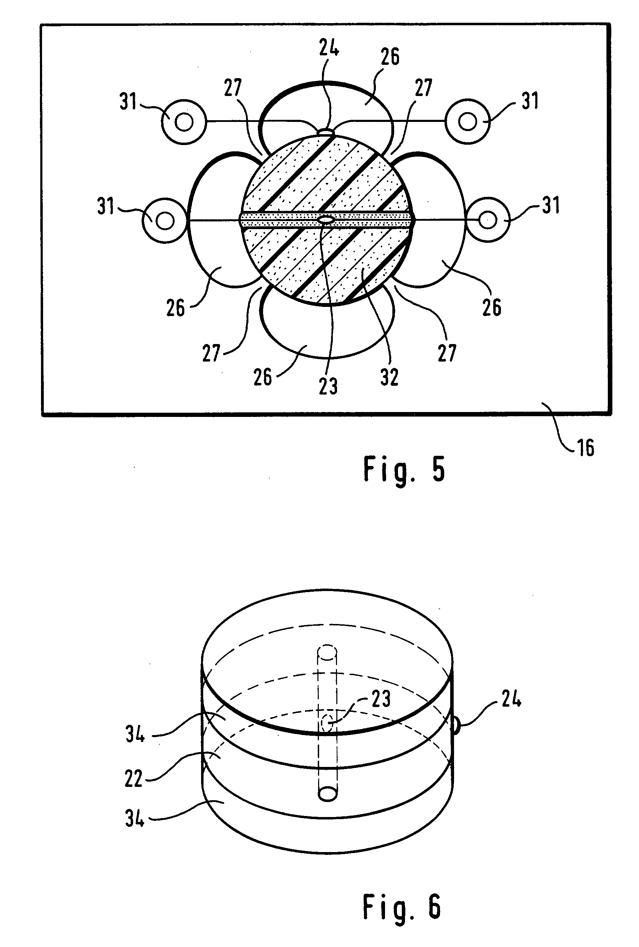

Figur 5 zeigt eine Ausführungsform der STHD, die dem oben erwähnten zweiten Typ entspricht, bei dem die thermische Masse der STHD eine sehr geringe thermische Leitfähigkeit bei gleichzeitig ausreichend hoher Wärmekapazität hat.

Bei einer solchen Ausführungsform ist es wichtig, daß der im Inneren der thermischen Masse angebrachte THS 23 so lokalisiert ist, daß der Abstand zwischen Sensor und allen Punkten von Grenzflächen der thermischen Masse 32, die nicht gegenüber der Umgebungsluft isoliert sind, im wesentlichen gleich groß ist. Im dargestellten Fall, bei dem die thermische Masse eine Kugel ist, die nahezu an ihrer gesamten Oberfläche in thermischem Kontakt zu der Umgebungsluft steht, bedeutet dies, daß der THS im Zentrum der thermischen Masse lokalisiert sein sollte.

Der MBLS 24 ist in diesem Fall an der Oberfläche der thermischen Masse 32 angeordnet. Schwankungen der Temperatur in der Umgebung einer solchen STHD führen zur Ausbildung räumlicher Temperaturgradienten im Inneren der thermischen Masse 32, die mit zwei oder mehreren in bzw. an der thermischen Masse verteilten Temperatursensoren registriert werden und eine sehr detaillierte Rückverfolgung des dem Meßzeitpunkt vorausgehenden Temperaturverlaufs ermöglichen, ohne daß in dem den Meßzeitpunkt vorausgehenden Zeitraum elektrische Energie verbraucht wird.

Die erwähnte Bedingung, daß zwischen dem THS 23 und Punkten der Oberfläche, die nicht thermisch isoliert sind, ein gleichmäßiger Abstand eingehalten werden soll, läßt sich auf unterschiedliche weise realisieren. Figur 6 zeigt beispielsweise eine Prinzipsskizze von einer Ausgestaltung, bei die thermische Masse kreisscheibenförmig ist, wobei die Flachseiten der Kreisscheibe durch Isolatorelemente 34 gegenüber der Umgebungsluft thermisch isoliert sind und der THS 23 im Zentrum der Kreisscheibe lokalisiert ist.

## Patentansprüche

1. Analysesystem zur analytischen Untersuchung einer Probe, insbesondere einer Körperflüssigkeit von Menschen oder Tieren umfassend
Testelemente (3), die zur Durchführung einer Analyse mit einer zu untersuchenden Probe (8) in Kontakt gebracht werden, wobei in einer Meßzone (7) des Testelementes (3) eine für die Analyse charakteristische meßbare Veränderung stattfindet, und
ein Auswertegerät (2) mit einer Testelementhalterung (5) zur Positionierung des Testelementes (3) in eine Meßposition und einer Meß- und Auswerteelektronik (15) zur Messung der charakteristischen Veränderung und zur Ermittlung eines auf dem Ergebnis der Messung basierenden Analyseresultates,
wobei die Meß- und Auswerteelektronik (15) eine Temperaturkorrektureinrichtung (18) aufweist, um bei der Ermittlung des Analyseresultates die zum Zeitpunkt der Messung in der Meßzone (7) herrschende Temperatur auf Basis einer mittels eines entfernt von der Meßzone lokalisierten Temperatursensors durchgeführten Temperaturmessung zu berücksichtigen,
**dadurch gekennzeichnet, daß**
die Temperaturkorrektureinrichtung (18) eine Temperaturverlauf-Abbildungseinrichtung (20) zur stromlosen Rückverfolgung des dem Meßzeitpunkt vorausgehenden Temperaturverlaufs ohne dem Meßzeitpunkt vorausgehenden Verbrauch an elektrischer Energie einschließt.

2. Analysesystem nach Anspruch 1, **dadurch gekennzeichnet, daß** die Temperaturverlauf-Abbildungseinrichtung (20) eine thermische Masse (22), die in dem Auswertegerät thermisch isoliert befestigt ist, und mehrere an unterschiedlichen Stellen lokalisierte Temperatursensoren einschließt, wobei mindestens ein erster der Temperatursensoren ein im Innern der thermischen Masse lokalisierter Temperaturverlauf-Kontrollsensor (23) ist.

3. Analysesystem nach Anspruch 2, **dadurch gekennzeichnet, daß** ein zweiter Temperatursensor als Referenzsensor (24) des Temperaturverlauf-Abbildungssystems in der Nähe der thermischen Masse 22, aber ohne Kontakt mit dieser, lokalisiert ist.

4. Analysesystem nach Anspruch 2, **dadurch gekennzeichnet, daß** die Wärmeleitfähigkeit der thermischen Masse (32) so niedrig ist, daß Änderungen der Umgebungstemperatur zu meßbaren Temperaturgradienten im Innern der thermischen Masse führen, die ein Abbild der zeitlichen Änderung der Umgebungstemperatur innerhalb eines Zeitraums von mindestens fünf Minuten darstellen und daß mindestens zwei Temperatursensoren (22,23) der Temperaturverlauf-Abbildungseinrichtung (20) in Kontakt mit der thermischen Masse lokalisiert sind.

5. Analysesystem nach Anspruch 4, **dadurch gekennzeichnet, daß** einer der Temperatursensoren (24) an der Oberfläche der thermischen Masse lokalisiert ist.

6. Analysesystem nach einem der Ansprüche 2 bis 5, **dadurch gekennzeichnet, daß** der Temperaturverlauf-Kontrollsensor (23) in der thermischen Masse so lokalisiert ist, daß der Abstand zwischen dem Sensor (23) und allen Punkten nicht thermisch isolierter Grenzflächen der thermischen Masse im wesentlichen gleich groß ist.

7. Analysesystem nach Anspruch 6, **dadurch gekennzeichnet, daß** die thermische Masse (22,32) kugelförmig, ihre Oberfläche thermisch gegenüber der Umgebungsluft nicht isoliert und der Temperaturverlauf-Kontrollsensor (23) im Zentrum der thermischen Masse lokalisiert ist.

8. Analysesystem nach Anspruch 6, **dadurch gekennzeichnet, daß** die thermische Masse (22,32) kreisscheibenförmig ist, die Flachseiten der Kreisscheibe gegenüber der Umgebungsluft thermisch isoliert sind und der Temperaturverlauf-Kontrollsensor (23) im Zentrum der Kreisscheibe lokalisiert ist.
